**Europäisches Patentamt**

**European Patent Office**

**Office européen des brevets**

(19)

(11) Veröffentlichungsnummer: **0 431 284 B1**

(12)

# EUROPÄISCHE PATENTSCHRIFT

(45) Veröffentlichungstag der Patentschrift: **04.05.94**

(21) Anmeldenummer: **90119790.5**

(22) Anmeldetag: **16.10.90**

(51) Int. Cl.⁵: **C04B 35/00**, C01G 30/02, C01B 13/36, C01G 9/02

(54) **Verfahren zur Herstellung eines bei der Produktion eines Varistors verwendeten Ausgangspulvers und nach diesem Verfahren hergestelltes Ausgangspulver.**

(30) Priorität: **05.12.89 US 446459**

(43) Veröffentlichungstag der Anmeldung:
**12.06.91 Patentblatt 91/24**

(45) Bekanntmachung des Hinweises auf die Patenterteilung:
**04.05.94 Patentblatt 94/18**

(84) Benannte Vertragsstaaten:
**AT CH DE FR GB IT LI**

(56) Entgegenhaltungen:
**EP-A- 0 251 589**
**EP-A- 0 272 964**
**WO-A-88/02921**
**DE-A- 3 619 620**
**US-A- 4 681 717**

**JOURNAL OF THE AMERICAN CERAMIC SO-CIETY Bd. 72, Nr. 10, Oktober 1989, Seiten 2004 - 2008; S.M.HAILE ET AL.: 'AQUEOUS PRECIPITATION OF SPHERICAL ZINC OXIDE POWDERS FOR VARISTOR APPLICATIONS '**

**JOURNAL OF THE AMERICAN CERAMIC SO-CIETY Bd. 72, Nr. 8, August 1989, WESTER-**

**VILLE,OHIO,USA Seiten 1390 - 1395; J.KIM ET AL.: 'SINTERING OF ZINC OXIDE DOPED WITH ANTIMONY OXIDE AND BISMUTH OXI-DE '**

(73) Patentinhaber: **ASEA BROWN BOVERI AG**
**Haselstrasse 16**
**CH-5401 Baden(CH)**

(72) Erfinder: **Dawson, William J., Dr.**
**5136 Sassafras Road**
**Columbus, Ohio 43228(US)**
Erfinder: **Kluge, Wolfgang, Dr.**
**Pilgerstrasse 75**
**CH-5405 Baden(CH)**
Erfinder: **Perkins, Roger, Dr.**
**Steinstrasse 20A**
**CH-5406 Baden(CH)**
Erfinder: **Rossinelli, Marco**
**Schönbühlstrasse 20**
**CH-5442 Fislisbach(CH)**

EP 0 431 284 B1

**Beschreibung**

TECHNISCHES GEBIET

Die Erfindung bezieht sich auf ein Verfahren zur Herstellung eines bei der Produktion eines Varistors verwendeten, Dotierstoffe enthaltenden Ausgangspulvers, welche Dotierstoffe nach Mischen dieses Pulvers mit einem Basispulver in einem keramischen Verfahren in den Körnern des Basispulvers verteilt werden. Die Erfindung betrifft ferner ein nach einem derartigen Verfahren hergestelltes Pulver.

STAND DER TECHNIK

Aus US-A-4142996 ist es bekannt, ein bei der Produktion eines Varistors verwendetes Pulver herzustellen, indem Oxysalze von Zink und Dotierstoffzusätzen in Wasser zusammengeführt werden. Durch Erhitzen wird hieraus eine Schmelze gewonnen, welche durch weiteres Erhitzen entwässert wird.

Ein weiteres Verfahren zur Herstellung eines bei der Produktion eines Varistors verwendeten Pulvers, bei dem Zinkoxid mit wenigstens einem Teil der Dotierstoffe zusammengeführt wird, ist in US-A-4540971 beschrieben. Bei diesem Verfahren wird eine wässrige, Zink- und Dotierstoffsalze enthaltende Lösung einer Copräzipitation unterworfen, um so ein gleichförmiges Präzipitat zu erzeugen. Das Präzipitat wird sodann durch Vakuumfiltration gesammelt und einer Gefriertrocknung unterzogen, um überschüssiges Wasser zu entfernen und um das erwünschte Pulver zu bilden.

Es ist ferner bekannt, Zink unter hydrothermalen Bedingungen zu fällen. US-A-1536619 beschreibt die Fällung von Zinkhydroxid und Zinkcarbonat aus einer Zinkchloridlösung, um so die Werte von metallischem Zink zu ermitteln. In US-A-1836700 ist ein ähnlicher Verfahrensschritt offenbart, wobei jedoch das Präzipitat in einem gesättigten Dampfstrom bei 300 °C erhitzt wird, um so die Teilchengrösse des Präzipitats zu erhöhen. In US-A-3674476 ist ein Verfahrensschritt zur hydrothermalen Behandlung dazu vorgesehen, ein Zinkoxidpulver zu erzeugen, welches als lichtleitende Schicht in der Elektrophotographie verwendet wird. Bei diesem Verfahren wird Zinkhydroxid oder Zinkcarbonat bei einer Temperatur zwischen 180 und 300 °C in einem Autoklaven behandelt, um so feines Zinkoxidpulver zu erzeugen. Ein hydrothermales Verfahren zur Erzeugung von dotiertem Zinkoxidpulver zur Verwendung in Varistoren ist ferner beschrieben von W.J. Dawson in Ceramic Bulletin Vol. 67, No. 1988, p. 1673 - 1678. Hierbei soll eine gefällte Verbindung auf der Basis Wismut- und Manganoxide hergestellt werden. Ein hydrothermaler Behandlungsschritt ist vorgesehen, um die Fällung zu vervollständigen.

DARSTELLUNG DER ERFINDUNG

Der Erfindung, wie sie in den Patentansprüchen 1 und 12 definiert ist, liegt die Aufgabe zugrunde, ein Verfahren zur Herstellung eines bei der Produktion eines Varistors verwendeten Ausgangspulvers anzugeben, welches in reproduzierbarer Weise äusserst feinkörnig darstellbar ist, und dessen Körner weitgehend chemisch homogen sind, eine gleichförmige Teilchengrösse aufweisen, und zugleich feine Kristallite aufweisen, die von Varistorzusatzstoffen gebildet sind und zu den Pulverteilchen koaguliert sind.

Die Erfindung basiert auf der Erkenntnis, dass ein hydrothermaler Prozess die Reaktion daran beteiligter Oxide oder daran beteiligter Vorläufer der Oxide in der Gegenwart von heissem Wasser bewirkt, und dass Ausgangspulver nach der Erfindung typischerweise von anhydridischen Einkristallteilchen mit äusserst geringer Grösse (10 bis 1000 nm) gebildet werden. Mahlen oder Hochtemperaturbrennen sind nicht mehr erforderlich, wodurch die damit verbundenen Probleme der Verklumpung und der Kontamination entfallen. Es ist zu beachten, dass die Zusatzstoffe in verschiedener Form in das Verfahren nach der Erfindung eingebracht werden können: als Oxide, Hydroxide und/oder Salze. Die Ausgangsmaterialien können daher in flexibler Weise bestimmt werden. Vorteile des Verfahrens nach der Erfindung umfassen die Möglichkeit, unmittelbar ein feines, gleichförmiges Pulver zu produzieren, welches mit dem Zinkoxid umfassenden Basispulver gemischt werden kann.

Das Pulver nach der Erfindung hat gegenüber den nach herkömmlichen Verfahren, wie Brennen und Mahlen, hergestellten Pulvern eine grosse Reinheit, eine definierte Morphologie und eine enge Teilchengrössenverteilung. Es weist für die Produktion von Varistoren besondere Vorteile auf: gleichförmige Verteilung der Zusatzstoffe, die Möglichkeit der Beeinflussung der Mikrostruktur (durch Beeinflussung der Pulvermetallurgie) und verfahrenstechnische Wiederholbarkeit.

Das Pulver nach der Erfindung besteht aus feinen, gleichförmigen Kristalliten, welche Verbindungen sind der Dotieroxide des Varistors. Die Kristallite haben Durchmesser kleiner 0,1 $\mu$m und sind koaguliert zu Teilchen von gleichförmiger Grösse und von mittleren Durchmessern kleiner 1 $\mu$m. Das Pulver nach der Erfindung enthält Varistorzusatz stoffe, wie etwa Barium, Wismut, Seltene Erden, Antimon, Cobalt, Mangan, Chrom, Zinn und/oder Nickel. Zink kann zusätzlich zugegeben werden, um so die kristalline Phase des Dotieroxides zu steuern. Das Pulver nach der Erfindung lässt sich mit Zinkoxidpulver äusserst gut vermischen. Die vermischten Pulver können problemlos verdichtet und gesintert werden, um so einen Teil eines Varistors zu bilden. Wegen ihrer chemischen Gleichförmigkeit, welche durch ihre feine Kristallitstruktur und ihre Einphasennatur gewährleistet ist, verleihen diese Pulver dem Varistorteil eine homogene Mikrostruktur.

Das nach dem erfindungsgemässen Verfahren hergestellte Pulver weist eine einzige kristalline Zusammensetzung auf. Typischerweise enthält es Varianten von Spinell- und Pyrochlorverbindungen mit den allgemeinen Formeln: $Zn_7 Sb_2 O_{12}$ und $Zn_2 Bi_3 Sb_3 O_{14}$, welche aber auch andere Zusatzstoffe wie Cobalt, Chrom und Mangan in fester Lösung enthalten können. Es kann je nach Pulverzusammensetzung entweder eine Mischung von Spinell- und Pyrochlorprodukten gebildet werden oder aber ein nahezu einphasiges Pyrochlorprodukt.

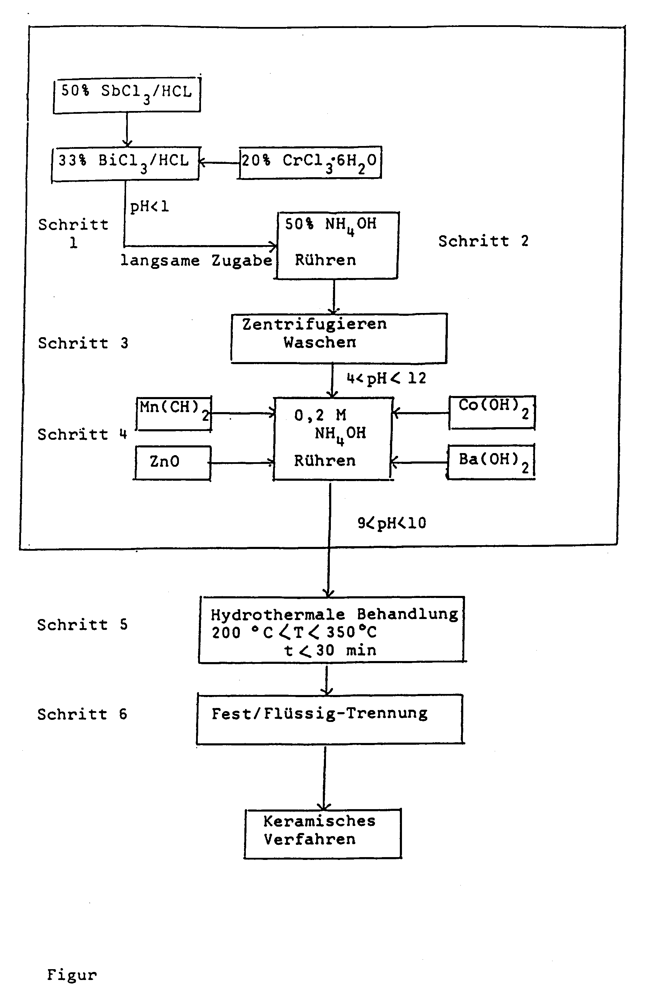

## BESCHREIBUNG DER ZEICHNUNG

Die einzige Figur zeigt ein Ablaufdiagramm einer bevorzugten Ausführungsform des erfindungsgemässen Verfahrens zur Herstellung eines Pulvers, welches aus submikroskopischen Teilchen von Pyrochlor- und/oder Spinellstruktur besteht und Zusatzstoffe enthält, welche nach Mischen mit ZnO-Pulver in einem keramischen Prozess in den ZnO-Körnern eines ZnO-Varistors verteilt sind.

## WEG ZUR AUSFÜHRUNG DER ERFINDUNG

Wie aus der Figur entnommen werden kann, sollten im bevorzugten Ausführungsbeispiel der Erfindung sechs wesentliche Schritte ausgeführt werden.

In einem ersten Schritt werden Salze, wie Oxychloride, Chloride, Azetate und/oder Nitrate, welche die genauen im Vorläuferpulver bzw. im Varistorpulver vorgeschriebenen Verhältnisse der Zusatzstoffe liefern, in einer wässrigen Säurelösung gelöst, um eine saure Lösung von mindestens einem der folgenden Metalle zu bilden: Antimon, Barium, Wismut, Chrom, Zink, Kobalt und Mangan.

In einem zweiten Schritt wird die gelöste Salzlösung langsam zu einer kräftig gerührten basischen Lösung auf der Basis einer vorbestimmten Konzentration mindestens eines der Hydroxide von Natrium, Ammonium und Kalium gegeben, bis ein pH-Wert zwischen 4 und 12 erreicht ist. Der genaue pH-Wert hängt von den im ersten Schritt zugegebenen Komponenten ab. Die Verwendung von Mangan in Schritt 1 bestimmt einen hohen pH-Endwert, wohingegen Antimon und Wismut über einen breiten pH-Wertebereich gefällt werden können.

In einem dritten Schritt wird das in Schritt 2 gebildete Fällungsprodukt abgetrennt von der sich ergebenden Salzlösung und mit reinem Wasser gewaschen bis die Gehalte des Fällungsproduktes an Chlorid, Nitrat, Azetat und/oder freiem Hydroxid ausreichend klein sind, um die fast vollständige Einbindung aller Elemente in einem weiteren Schritt 5 zu gewährleisten. Dies kann im allgemeinen geprüft werden durch Messen der spezifischen Leitfähigkeit der Waschflüssigkeit und durch Waschen bis eine spezifische Leitfähigkeit kleiner 10 mS erreicht ist.

In einem vierten Schritt wird das gewaschene Fällungsprodukt in reinem Wasser dispergiert und wird kräftig gerührt, um mit anderen Varistorbestandteilen ein homogenes Gemenge zu bilden, wobei das im Ausgangspulver angeforderte Mengenverhältnis unter Einschluss von Zinkoxid, und/oder Mangan-, Barium-, und/oder Kobalthydroxid beibehalten bleibt. Es ist zu empfehlen, in diesem statt im ersten Schritt Zinkoxid und Bariumhydroxid zuzugeben, da Zinkoxid preiswert ist. Auf der anderen Seite ist es günstig, Kobalt und Mangan in Schritt 1 zuzugeben, da dann die Morphologie und die Zusammensetzung besser kontrolliert werden können. Diese Zugabe in Schritt 1 kann gegebenenfalls aber auch aus Kostengründen unterbleiben. Nach dem Rühren wird das Gemenge durch Zugabe von Ammoniumhydroxid derart eingestellt, dass sich hierbei eine 0,2 bis 0,5- molare Konzentration von Ammoniumhydroxid ergibt.

In einem fünften Schritt wird das homogene Gemenge hydrothermal behandelt. Es wird in einen verschliessbaren Druckreaktor gegeben, welcher entweder als rührbarer Autoklav oder als Durchflussgefäss ausgebildet sein kann, und wird sodann auf eine Temperatur zwischen 200 und 350 °C erhitzt, wobei die genaue Temperatur von der Zusammensetzung des Ausgangspulvers abhängt. Hierbei wird das Gemenge in Gegenwart eines oxidierenden Gases oder eines nicht verunreinigten flüssigen Oxidationsmittels über einen Zeitraum, welcher vorzugsweise 30 Minuten nicht übertrifft, erhitzt. Das Gemenge wird auf unter 100 °C abgekühlt und wird sodann aus dem Druckgefäss entfernt.

In einem sechsten Schritt werden während der hydrothermalen Behandlung gebildete kristalline Festkörper aus der verbleibenden flüssigen Phase, welche im wesentlichen frei ist von lösbaren oxidischen Komponenten, entfernt. Die kristallinen Festkörper werden gewaschen, um so die verbleibenden ionischen Unreinheiten zu entfernen. Die kristallinen Festkörper haben im wesentlichen die gleiche Metallionenstöchiometrie wie das Ausgangsmaterial für das vorstehend beschriebene Verfahren.

Hierbei können die Verfahrensparameter angepasst werden, um so die Pulverstöchiometrie, die Metallionenwertigkeit und die Teilchenmorphologie in geeigneter Weise einzustellen. Im allgemeinen können Ammoniumhydroxid, Natriumhydroxid und Kaliumhydroxid bei der hydrothermalen Behandlung (Schritt 5) zugegeben werden, um hierdurch die Kristallinität des Fällungsproduktes zu verbessern und die Bildung von Mischoxidphasen zu fördern. Der Einbau von Barium wird bei erhöhten pH-Werten begünstigt. Die metallische Ionenwertigkeit kann durch Zugabe von löslichem, oxidierendem oder reduzierendem Mittel gesteuert werden. Bei Wismut enthaltenden Verbindungen ist es wünschenswert, ein oxidierendes Gas oder irgendein anderes Oxidationsmittel vorzusehen, welches die Bildung von Wismutmetall als Reaktionsprodukt verhindert. Die Pulvermorphologie kann gesteuert werden, indem Ammoniumhydroxid im hydrothermalen Behandlungsschritt verwendet wird. Bei niedrigen und hohen Ammoniumhydroxidkonzentrationen werden die Fällungsprodukte verdichtet, wodurch sich vergleichsweise grosse Teilchen mit Grössen zwischen 1 und 3 $\mu$m ergeben. Bei mittleren Ammoniumhydroxidkonzentrationen, d.h. zwischen 0,2 bis 0,5 Mol, ergeben sich feine und gleichförmige Teilchen mit Grössen kleiner 0,5 $\mu$m. Der Metallioneneinbau kann sowohl durch pH-Wert als auch Oxidationspotential gesteuert werden. Der Einbau von Barium wird während der hydrothermalen Behandlung beim Vorliegen von oxidierenden Bedingungen verbessert.

Es wurden einige Versuche durchgeführt, um den Einfluss der Ausgangsstoffe und der Behandlungsvariablen zu bestimmen und um nahezu optimale Verfahrensbedingungen bei zwei Formulierungen von Zusatzstoffen zu erreichen.

Die Versuche wurden durchgeführt in einem 3,785 Liter fassenden Rührautoklaven mit einem Füllvolumen von 1,5 Litern. Die verwendeten Chemikalien waren hochreine Salze, Oxide und Hydroxide.

Bei einem typischen Versuch wurde ein Hydroxidfällungsprodukt erzeugt, indem eine durchmischte Salzlösung, welche beliebige oder alle der Dotierstoffe enthielt, mit einer Geschwindigkeit zwischen 5 und 100 ml pro Minute in eine 1,5-Liter-Basislösung von vorgegebener Konzentration gegossen wurde. Das Fällungsprodukt wurde des weiteren während annähernd 10 bis 20 Minuten gemischt. Während dieser Zeit wurde die Aufschlämmung entfernt und mit reinem Wasser gewaschen bis fast alle Salze entfernt waren. Ammoniumhydroxid wurde zugegeben und die gesamte Mischung in den Autoklaven gegeben und verschlossen. Sauerstoff unter Überdruck wurde bei Raumtemperatur zugeführt. Der Festkörper wurde unter Verwendung einer Zentrifugiervorrichtung entfernt.

Die sich ergebenden Fällungsprodukte wurden untersucht mittels Röntgenbeugung, um die Kristallphasen zu bestimmen, mittels Zentrifugal-Teilchenanalyse, um die Grösse der verdichteten Teilchen festzustellen, mittels Elektronenmikroskopie, um die Kristallmorphologie zu ermitteln und mittels Mikroprobenanalyse, um die chemische Homogenität festzustellen.

Das erste Dekantat (die während der Behandlung gebildete flüssige Phase) wurde mittels Plasmaanalyse untersucht, um so die Konzentrationen an nicht umgesetzten Elementen zu bestimmen.

Beispiel 1

Ein Pulver mit der folgenden Zusammensetzung (Stöchiometrie ohne Sauerstoff) wurde hergestellt:

```
45    Atomprozent Antimon,

20    Atomprozent Bismut,

15    Atomprozent Kobalt,

10    Atomprozent Mangan,

 5    Atomprozent Barium und

 5    Atomprozent Chrom.
```

Eine 50 Gewichtsprozent enthaltende Lösung von $SbCl_3$ in konzentrierter Salzsäure wurde zusammen mit einer 33,3 Gewichtsprozent enthaltenden Lösung von BiOCl in konzentrierter Salzsäure und einer 20 Gewichtsprozent enthaltenden Lösung von $CrCl_3 \cdot 6H_2O$ in destilliertem Wasser gelöst. Die Lösung wurde mit einer Geschwindigkeit von 25 ml pro Minute in einen Edelstahlmischer gegossen, welcher 1,5 Liter einer Lösung von destilliertem Wasser und Ammoniumhydroxid mit einem Anteil von 241,5 g an konzentriertem Ammoniumhydroxid enthielt. Nachdem die Copräzipitation beendet war, wurde die Mischung für zusätzlich 20 Minuten gemischt. Diese Mischung wurde sodann in einer Zentrifugierflasche getrennt. Die klare flüssige Phase wurde dekantiert und auf Metallionenkonzentration analysiert, um die vollständige Fällung sicherzustellen. Der pH-Wert wurde mit 8,69 gemessen. Das Fällungsprodukt wurde mit destilliertem Wasser gewaschen und hierbei wurden Salze entfernt.

Das Präzipitat wurde in 1 Liter destilliertem Wasser dispergiert. Danach wurde eine 50 Gewichtsprozent Ammoniumhydroxid enthaltende wässrige Lösung zugegeben. Sodann wurden Kobalthydroxid, Manganhydroxid und Bariumhydroxid (Octahydrat) zugegeben. Die Mischung wurde in den 3,785 Liter-Autoklaven gegossen und der Autoklav verschlossen. Sauerstoff von 13,6 bar Druck wurde dem Dampfraum oberhalb der Lösung zugegeben. Der Autoklav wurde unter Rühren mit einer Geschwindigkeit von 350 Umdrehungen pro Minute auf 240 °C erhitzt und wurde während 30 Minuten auf dieser Temperatur gehalten. Der Autoklav wurde auf 90 °C abgekühlt und bei Atmosphärendruck geöffnet. Die sich ergebende Aufschlämmung wurde in einer Zentrifugierflasche getrennt. Die klare flüssige Phase wurde dekantiert und mittels induktiv eingekoppelten Plasmas auf Metallionenkonzentrationen untersucht. Konzentrationen an nichtreagierten Metallen waren 7,25 mg/l Antimon, 202 mg/l Chrom und weniger als 1 mg/l Wismut, Kobalt, Mangan und Barium. Die feste Phase wurde mittels Röntgenbeugung analysiert. Es wurde festgestellt, dass sie hauptsächlich von Material mit Pyrochlorstruktur mit einer Gitterkonstante von 1,039 nm gebildet wird. Eine geringere Konzentration (etwa 5%) an $Mn_3O_4$ wurde bei dieser Reaktion ebenfalls gebildet.

Das Pulver bestand aus verdichteten Teilchen mit einer durchschnittlichen Grösse von 0,46 $\mu$m.

Diese Teilchen wiesen feine Kristallite aus Pyrochlormaterial auf, welche vermischt waren mit einem gleichermassen feinen Material auf der Basis von Manganoxid.

Beispiel 2 bis 12

Es wurden einige Pulver gleicher chemischer Zusammensetzung wie in Beispiel 1 hergestellt, wobei unterschiedliche Konzentrationen und Reaktionstemperaturen und -zeiten bei der hydrothermalen Behandlung vorgesehen waren, wie auch eine Manganquelle und eine bestimmte Anzahl an Waschzyklen für das Fällungsprodukt. Das Herstellverfahren war hierbei dasselbe wie das bei dem zuvor beschriebenen Beispiel 1. Eine Zusammenfassung der Verfahrensparameter und der Pulvereigenschaften sind in der nachfolgenden Tabelle angegeben:

VARISTOR-DOTIERSTOFFPULVER-ZUBEREITUNG

Behandlung

| Beispiel Nr. | Temp. [°C] | Zeit [min.] | $NH_4OH$ g/l | Wasch-zyklen | Mangan-quelle |
|---|---|---|---|---|---|
| 2 | 300 | 30 | 28,9 | 3 | $Mn_2O_3$ |
| 3 | 300 | 30 | 5,8 | 3 | $Mn_2O_3$ |
| 4 | 300 | 30 | 57,8 | 3 | $Mn_2O_3$ |
| 5 | 200 | 0 | 11,6 | 3 | $Mn_2O_3$ |
| 6 | 200 | 15 | 11,6 | 3 | $Mn_2O_3$ |
| 7 | 200 | 30 | 11.6 | 3 | $Mn_2O_3$ |
| 8 | 200 | 60 | 11,6 | 3 | $Mn_2O_3$ |
| 9 | 230 | 0 | 11,6 | 3 | $Mn_2O_3$ |
| 10 | 230 | 30 | 11,6 | 3 | $Mn_2O_3$ |
| 11 | 260 | 0 | 11,6 | 3 | $Mn_2O_3$ |
| 12 | 230 | 30 | 11,6 | 5 | $Mn_2O_3$ |

PRODUKTEIGENSCHAFTEN

| Beispiel Nr. | Kristalline Phase (Gitterkonstanten [$10^{-10}$m]) | durchschnittliche Teilchengrösse [$\mu$m] |
|---|---|---|
| 2 | P(10,40) + $Mn_2O_3$ | 0,87 |
| 3 | P(10,39) + $Mn_2O_3$ | 1,46 |
| 4 | P(10,38) + $Mn_2O_3$ | 1,40 |
| 5 | N.D. | 1,98 |
| 6 | P + $Mn_2O_3$ | N.D. |
| 7 | P + $Mn_2O_3$ | N.D. |
| 8 | P(10,43) + $Mn_2O_3$ + $BaCrO_4$ | 0,75 |
| 9 | P(10,40) + $Mn_2O_3$ | N.D. |
| 10 | N.D. | 0,84 |
| 11 | N.D. | 0,85 |
| 12 | P(10,41) + $Mn_2O_3$ + $BaCrO_4$ | 0,95 |

N.D. = nicht bestimmt

Kristallines Material vom Pyrochlortyp konnte bei Temperaturen um 200 °C und bei einer Behandlungszeit von 15 Minuten hergestellt werden. Das Pulver wurde bei höheren Behandlungstemperaturen und längeren Behandlungszeiten kristalliner. Eine minimale Temperatur von ungefähr 230 °C war erforderlich, um ein äusserst kristallines Material in weniger als 30 Minuten herzustellen. Minimale Teilchengrösse wurde bei einer Ammoniumhydroxid-Konzentration im Bereich zwischen 11,6 und 28,9 Gramm pro Liter (g/l) erreicht. Dieser Bereich entspricht auch demjenigen Bereich, indem alle Zusatzstoffe besonders gut eingebaut werden können (besser als 99%).

Beispiel 13

Ein Pulver mit folgender stöchiometrischer Zusammensetzung (ohne Sauerstoff) wurde hergestellt:

```
50    Atomprozent Zink,

25    Atomprozent Antimon,

10    Atomprozent Wismut,

 9,5  Atomprozent Kobalt,

  4   Atomprozent Mangan,

  1   Atomprozent Barium und

 0,5  Atomprozent Chrom.
```

Eine 50 Gewichtsprozent enthaltende Lösung von $SbCl_3$ in konzentrierter Salzsäure wurde zusammen mit einer 33,3 Gewichtsprozent enthaltenden Lösung von BiOCl in konzentrierter Salzsäure und einer 20 Gewichstprozent enthaltenden Lösung von $CrCl_3 \cdot 6H_2O$ in destilliertem Wasser gelöst. Die Lösung wurde unter ständigem Vermischen mit einer Geschwindigkeit von 100 ml/min in einen Edelstahlmischer gegossen, welcher 1,5 Liter einer Lösung von destilliertem Wasser und Ammoniumhydroxid hoher Konzentration enthielt. Nachdem die Copräzipitation vollendet war, wurde das Gemisch weitere 20 Minuten vermengt. Die Aufschlämmung wurde sodann in einer Zentrifugierflasche getrennt. Die klare flüssige Phase wurde abdekantiert und die Metallionenkonzentration bestimmt, um so vollständige Fällung sicherzustellen. Der pH-Wert betrug 8,15. Das Fällungsprodukt wurde mit destilliertem Wasser gewaschen, um so Salze zu entfernen.

Das Fällungsprodukt wurde in 1 Liter destilliertem Wasser aufgeschlämmt. Eine 50 Gewichtsprozent enthaltende wässrige Ammoniumhydroxid-Lösung wurde zugegeben. Danach wurden Kobalthydroxid, frisch ausgefälltes Manganhydroxid, Bariumhydroxid (Octahydrat) und Zinkoxid zugegeben. Die erhaltene Mischung wurde in den 3,785 Liter umfassenden Autoklaven gegeben und der Autoklav verschlossen. Sauerstoffgas von 13,6 bar Druck wurde in den Dampfraum oberhalb der Mischung eingeführt. Der Autoklav wurde unter Rühren mit einer Geschwindigkeit von 350 Umdrehungen pro Minute auf 240 °C erhitzt und 30 Minuten lang auf dieser Temperatur gehalten. Danach wurde der Autoklav auf 90 °C abgekühlt und bei Atmosphärendruck geöffnet. Die sich ergebende Aufschlämmung wurde in einer Zentrifugierflasche getrennt. Die klare flüssige Phase wurde abdekantiert und auf Metallionenkonzentration mittels eines induktiv eingekoppelten Plasmas untersucht. Die Konzentrationen an nicht umgesetzten Metallen betrugen 1,38 mg/l Sb, 56,5 mg/l Ba, 6,25 mg/l Zn und weniger als 1 mg/l Cr, Bi, Co und Mn.

Die feste Phase wurde mittels Röntgenbeugung analysiert. Es wurde ermittelt, dass sie hauptsächlich ein Gemenge eines Materials von Pyrochlor-Struktur mit einer Gitterkonstanten von 1,043 nm und eines Materials von Spinell-Struktur mit einer Gitterkonstanten von 0,853 nm aufweist. Eine geringe Konzentration (kleiner 5%) von $Mn_3O_4$ wurde bei der Umsetzung ebenfalls gebildet.

Das Pulver bestand aus Teilchen mit einer mittleren Grösse von 0,43 $\mu$m Die Teilchen bestanden aus feinen Kristalliten der Materialien mit Pyrochlor- und Spinellstruktur vermischt mit einer gleichermassen feinen Manganoxid-Phase.

Beispiel 14

Ein Pulver mit folgender stöchiometrischer Zusammensetzung (ohne Sauerstoff) wurde hergestellt:

```
 50   Atomprozent  Zink
 25   Atomprozent  Antimon
 10   Atomprozent  Wismut
  9,5 Atomprozent  Kobalt
  4   Atomprozent  Mangan
  1   Atomprozent  Barium  und
  0,5 Atomprozent  Chrom.
```

Eine 50 Gewichtsprozent enthaltende Lösung von $SbCl_3$ in konzentrierter Salzsäure wurde zusammen mit einer 50 Gewichtsprozent enthaltenden Lösung von $BiCl_3$ in konzentrierter Salzsäure, einer 20 Gewichtsprozent enthaltenden wässrigen Lösung von $CrCl_3 \cdot 6H_2O$, einer 50 Gewichtsprozent enthaltenden wässrigen Lösung von Zinkchlorid und einer 27,4 Gewichtsprozent enthaltenden wässrigen Lösung von $MnCl_2 \cdot 4H_2O$ in destilliertem Wasser gelöst. Die Lösung wurde unter ständigem Vermischen mit einer Geschwindigkeit von 100 ml/min in einen Edelstahlmischer gegossen, welcher 1,5 Liter einer Lösung von destilliertem Wasser und Natriumhydroxid mit einem Natriumhydroxid-Anteil von 174,8 Gramm enthielt. Nachdem die Copräzipitation vollendet war, wurde die Mischung für weitere 10 Minuten vermengt. Die Aufschlämmung wurde sodann in einer Zentrifugierflasche getrennt. Die klare flüssige Phase wurde abdekantiert und die Metallionenkonzentration zu Zwecken der Sicherstellung der vollständigen Fällung analysiert. Der gemessene pH-Wert betrug 7,6. Das Fällungsprodukt wurde mit destilliertem Wasser gewaschen, um so Salze zu entfernen. Ein Viertel des Fällungsproduktes wurde in 1400 ml destilliertem Wasser dispergiert, welches eine geeignete Menge einer 50 Gewichtsprozent enthaltenden Lösung von Natriumhydroxid enthielt.

Danach wurden Kobalthydroxid und Bariumhydroxid (Octahydrat) zugegeben. Die Mischung wurde sodann in den 3,785 Liter aufnehmenden Autoklaven gegeben und der Autoklav verschlossen. Sauerstoffgas unter einem Druck von 1,4 bar wurde in den Dampfraum des Autoklaven oberhalb der Mischung eingeführt. Der Autoklav wurde unter Rühren mit einer Geschwindigkeit von 350 Umdrehungen pro Minute auf 350 °C erhitzt und 30 Minuten lang auf dieser Temperatur gehalten. Danach wurde der Autoklav auf 90 °C abgekühlt und bei Atmosphärendruck geöffnet. Die sich ergebende Aufschlämmung wurde in der Zentrifugierflasche getrennt. Die klare flüssige Phase wurde abdekantiert und auf Metallionenkonzentration mittels eines eingekoppelten Plasmas untersucht. Die Konzentrationen an nicht umgesetzten Metallen betrugen 52,4 mg/l Sb, 1060 mg/l Zn, 155 mg/l Cr und weniger als 1 mg/l Ba, Bi, Co und Mn.

Die feste Phase wurde mittels Röntgenbeugung analysiert. Es wurde ermittelt, dass sie hauptsächlich ein Gemenge eines Materials von Pyrochlor-Struktur mit einer Gitterkonstanten von 1,040 nm und eines Materials von Spinell-Struktur mit einer Gitterkonstanten von 0,847 nm aufweist. Das Pulver wurde mittels Zentrifugalteilchenanalyse auf Teilchengrösse untersucht. Es bestand aus Teilchen mit einer mittleren Teilchengrösse von 2,03 $\mu$m.

EP 0 431 284 B1

Beispiel 15

Ein Pulver mit folgender stöchiometrischer Zusammensetzung (ohne Sauerstoff) wurde hergestellt:

```
50   Atomprozent Zink,

25   Atomprozent Antimon,

10   Atomprozent Wismut,

 9,5 Atomprozent Kobalt,

 4   Atomprozent Mangan,

 1   Atomprozent Barium und

 0,5 Atomprozent Chrom.
```

Geeignete Mengen an Antimonoxid, Wismutoxid, Zinkoxid, Mangan(II)oxid, Kobalthydroxid, Chromazetat und Bariumhydroxid (Octahydrat) wurden mit 1030 Gramm Wasser vermischt, in dem 168,3 Gramm Kaliumhydroxid gelöst waren. Die Lösung wurde in den 3,785 Liter-Autoklaven gegossen und der Autoklav verschlossen. Sauerstoffgas unter einem Druck von 1,4 bar wurde in den Dampfraum oberhalb der Lösung eingeführt. Der Autoklav wurde unter Rühren mit einer Geschwindigkeit von 350 Umdrehungen pro Minute auf 300 °C erhitzt und wurde während 30 Minuten auf dieser Temperatur gehalten. Der Autoklav wurde sodann auf 90 °C abgekühlt und bei Atmosphärendruck geöffnet. Die sich ergebende Aufschlämmung wurde in der Zentrifugierflasche getrennt. Die klare flüssige Phase wurde abdekantiert und mittels eines induktiv eingekoppelten Plasmas auf Metallionenkonzentration untersucht. Die Konzentrationen an nicht umgesetzten Metallen betrugen 1645 mg/l Sb; 737 mg/l Zn; 3,50 mg/l Bi; 3,75 mg/l Cr und weniger als 1 mg/l Ba, Co und Mn.

Die feste Phase wurde mittels Röntgenbeugung analysiert. Es wurde ermittelt, dass sie hauptsächlich ein Gemenge eines Materials von Pyrochlor-Struktur mit einer Gitterkonstanten von 1,046 nm und eines Materials von Spinell-Struktur mit einer Gitterkonstanten von 0,856 nm aufweist. Zinkoxid verblieb ebenfalls im Reaktionsprodukt.

Beispiel 16

Ein Pulver mit folgender stöchiometrischer Zusammensetzung (ohne Sauerstoff) wurde hergestellt:

```
50   Atomprozent Zink,

25   Atomprozent Antimon,

10   Atomprozent Wismut,

 9,5 Atomprozent Kobalt,

 4   Atomprozent Mangan,

 1   Atomprozent Barium und

 0,5 Atomprozent Chrom.
```

Eine geeignete Menge von $Sb(C_2H_3O_2)_3$ wurde unter Erhitzen auf 68 °C in 200 Gramm konzentrierter Essigsäure gelöst. Entsprechend wurde Wismutazetat unter Erhitzen auf 105 °C in 250 Gramm Essigsäure gelöst. Die zwei Lösungen wurden vereinigt und zu einer Lösung gegeben, die 500 Gramm destilliertes Wasser, Zinkazetat, Kobaltazetat, Manganazetat und Chromazetat aufwies und welche zuvor auf 80 °C erhitzt worden war. Die Lösung wurde mit einer Geschwindigkeit von 100 ml/min in einen Edelstahlmischer gegossen, welcher 1,5 Liter einer Wasser/Kaliumhydroxid-Lösung mit einem Zusatz von 565,9 Gramm konzentriertem Ammoniumhydroxid enthielt. Nach Beendigung der Copräzipitation wurde das gebildete Gemisch für weitere 10 Minuten vermischt. Die Aufschlämmung wurde sodann in der Zentrifugierflasche getrennt. Die klare Flüssigkeit wurde abdekantiert und auf Metallionenkonzentration untersucht, um die Beendigung des Fällungsvorganges sicher nachzuweisen. Der pH-Wert wurde mit 13,72 gemessen. Das

9

Fällungsprodukt wurde mit destilliertem Wasser gewaschen, um Salze zu entfernen.

Das Fällungsprodukt wurde in 1 Liter destilliertem Wasser aufgeschlämmt. Eine vorgegebene Menge von Bariumhydroxid (Octahydrat) wurde zugegeben und das Schlämmvolumen auf 1,5 Liter eingestellt. Das Gemisch wurde in den 3,785 Liter-Autoklaven gegossen und der Autoklav verschlossen. Sauerstoffgas von 1,4 bar wurde in den Dampfraum oberhalb der Lösung geführt. Der Autoklav wurde unter ständigem Rühren mit einer Geschwindigkeit von 350 Umdrehungen pro Minute auf 300 °C erhitzt und über 60 Minuten lang auf dieser Temperatur gehalten. Die sich ergebende Aufschlämmung wurde in der Zentrifugierflasche getrennt. Die klare flüssige Phase wurde abdekantiert und durch ein induktiv eingekoppeltes Plasma auf Metallionenkonzentration untersucht. Die Konzentrationen an nicht umgesetzten Metallen betrugen 2,25 mg/l Bi, 4 mg/l Ba, 5 mg/l Zn und weniger als 1 mg/l Cr, Sb, Co und Mn.

Die feste Phase wurde mittels Röntgenbeugung untersucht. Es wurde festgestellt, dass sie hauptsächlich ein Gemenge eines Materials von Pyrochlor-Struktur mit einer Gitterkonstanten von 1,046 nm und eines Materials von Spinell-Struktur mit einer Gitterkonstanten von 0,856n$\mu$m aufweist.

Beispiel 17

Ein Pulver mit folgender stöchiometrischer Zusammensetzung (ohne Sauerstoff) wurde hergestellt:

> **57 Atomprozent Zink,**
>
> **30 Atomprozent Antimon,**
>
> **12 Atomprozent Wismut und**
>
> **1 Atomprozent Barium.**

Eine geeignete Menge einer 50 Gewichtsprozent enthaltenden Lösung von $SbCl_3$ in konzentrierter Salzsäure wurde zusammen mit einer 33,3 Gewichtsprozent enthaltenden Lösung von BiOCl in konzentrierter Salzsäure gelöst. Die Lösung wurde unter ständigem Vermischen mit einer Geschwindigkeit von 100 ml/min in einen Edelstahlmischer gegossen, welcher 1,5 Liter einer Lösung von destilliertem Wasser und Ammoniumhydroxid hoher Konzentration enthielt. Nachdem die Copräzipitation vollendet war, wurde das Gemisch für weitere 10 Minuten vermengt. Die Aufschlämmung wude sodann in der Zentrifugierflasche getrennt. Die klare flüssige Phase wurde abdekantiert und die Metallionenkonzentration bestimmt, um so die Vollständigkeit der Fällung herzustellen. Der pH-Wert betrug 8,45. Das Fällungsprodukt wurde zwecks Entfernung von Salz mit destilliertem Wasser gewaschen.

Das Fällungsprodukt wurde in 1 Liter destilliertem Wasser aufgeschlämmt. Eine geeignete Menge einer 50 Gewichtsprozent enthaltenden wässrigen Ammoniumhydroxid-Lösung wurde zugegeben. Danach wurden entsprechende Mengen Zinkoxid und Bariumhydroxid (Octahydrat) zugegeben. Das Gemisch wurde in den 3,785 Liter umfassenden Autoklaven gegossen und der Autoklav verschlossen. Sauerstoffgas von 13,6 bar Druck wurde in den Dampfraum oberhalb des Gemisches eingeführt. Der Autoklav wurde unter Rühren mit einer Geschwindigkeit von 350 Umdrehungen pro Minute auf 300 °C erhitzt und 30 Minuten lang auf dieser Temperatur gehalten. Danach wurde der Autoklav auf 90 °C abgekühlt und bei Atmosphärendruck geöffnet. Die sich ergebende Aufschlämmung wurde in der Zentrifugierflasche getrennt. Die klare flüssige Phase wurde abdekantiert und mittels induktiv eingekoppelten Plasmas auf Metallionenkonzentration untersucht. Die Konzentrationen an nicht umgesetzten Metallen betrugen 36,2 mg/l Zn; 1540 mg/l Ba; 1,25 mg/l Co und weniger als 1 mg/l Cr, Bi, Sb und Mn.

Die feste Phase wurde mittels Röntgenbeugung analysiert. Es wurde festgestellt, dass sie hauptsächlich ein Gemenge eines Materials von Pyrochlor-Struktur mit einer Gitterkonstanten von 1,043 nm und eines Materials von Spinell-Struktur mit einer Gitterkonstanten von 0,861 nm aufweist.

**Patentansprüche**

1. Verfahren zur Herstellung eines bei der Produktion eines Varistors auf der Basis Metalloxid verwendeten und Dotierstoffe enthaltenden ersten Ausgangspulvers, dessen Dotierstoffe nach Vermischen des ersten Ausgangspulvers mit zumindest einem hauptsächlich Zinkoxid enthaltenden zweiten Ausgangspulver in einem keramischen Sinterprozess in und zwischen den Teilchen des mindestens einen zweiten Ausgangspulvers verteilt werden, gekennzeichnet durch folgende Verfahrensschritte:

(a) Herstellen einer homogenen wässrigen dispersen Lösung von Metalloxiden und/oder Metallhydroxiden mit gleicher Metallionenstöchiometrie wie die genannten Dotierstoffe und mit drei oder mehr der nachfolgend aufgeführten Metalle: Zink, Antimon, Wismut, Mangan, Kobalt, Chrom, Barium, Nickel, Seltene Erden, Silizium, Zinn, Aluminium, Bor und Mischungen davon,

(b) Erhitzen dieser dispersen Lösung in einem geschlossenen Druckreaktor auf eine Temperatur zwischen 200 und 350 °C zum Zweck einer hydrothermalen Behandlung,

(c) Abkühlen der hydrothermal behandelten, dispersen Losung auf eine Temperatur von höchstens ca. 100 °C, und

(d) Abtrennen des ersten Ausgangspulvers aus einer Lösung, die sich während der hydrothermalen Behandlung der homogen dispersen Lösung ergibt,

wobei das sich ergebende Ausgangspulver überwiegend von kristallinen Phasen mit Spinell- und/oder Pyrochlor-Struktur gebildet ist.

2. Verfahren nach Anspruch 1, gekennzeichnet durch folgende weitere Verfahrensschritte:

(e) Lösen wenigstens eines Salzes in einer Wasser/Säure-Lösung, um eine saure Lösung wenigstens eines der folgenden Metallionen zu bilden: Aluminium, Antimon, Barium, Wismut, Bor, Chrom, Kobalt, Mangan, Nickel, Seltene Erden, Silizium, Zinn und Zink,

(f) Zusammenführen dieser sauren Lösung und einer basischen Lösung, um ein Fällungsprodukt zu bilden, welches zumindest ein Metallion in Form des entsprechenden Metalloxids oder -hydroxids aufweist,

(g) Abtrennen dieses Fällungsproduktes von einer Salzlösung, die sich während des Fällungsprozesses ergibt, und

(h) disperses Lösen dieses Fällungsproduktes in Wasser, um zumindest einen Teil der homogenen dispersen Lösung gemäss Verfahrensschritt (a) zu bilden.

3. Verfahren nach Anspruch 2, gekennzeichnet durch die weiteren Verfahrensschritte

(i) Mischen des dispersen gelösten Fällungsproduktes mit Oxiden und/oder Hydroxiden wenigstens eines der folgenden Metalle: Aluminium, Antimon, Barium, Wismut, Bor, Chrom, Kobalt, Mangan, Nickel, Seltene Erden, Silizium, Zinn und Zink, um die homogene disperse Lösung gemäss Verfahrensschritt (a) zu bilden.

4. Verfahren nach Anspruch 3, dadurch gekennzeichnet, dass die Oxide und/oder Hydroxide gemäss Verfahrensschritt (i) Barium und/oder Zink und die Salze gemäss Verfahrensschritt (e) zumindest Kobalt und Mangan enthalten.

5. Verfahren nach Anspruch 1, gekennzeichnet durch den folgenden weiteren Verfahrensschritt

(j) Zufügen einer Base zur wässrigen dispersen in Verfahrensschritt (a) hergestellten Lösung.

6. Verfahren nach Anspruch 1, gekennzeichnet durch den folgenden weiteren Verfahrensschritt

(k) Einbringen eines oxidierenden Gases und/oder einer oxidierenden Flüssigkeit in den Druckreaktor vor Ausführung des Verfahrensschrittes (b).

7. Verfahren nach Anspruch 5, dadurch gekennzeichnet, dass die Base solange zugeführt wird, bis ein pH-Wert zwischen 4 und 12 erreicht ist, wobei der genaue pH-Wert von mindestens einem gemäss dem Verfahrensschritt (e) gelösten Salz abhängt.

8. Verfahren nach Anspruch 5, dadurch gekennzeichnet, dass die zur wässrigen dispersen im Verfahrensschritt (a) hergestellten Lösung zugefügte Base Ammoniumhydroxid ist.

9. Verfahren nach Anspruch 8, dadurch gekennzeichnet, dass zu der wässrigen dispersen Lösung eine zwischen 0,2 und 0,5 Mol liegende Konzentration an Ammoniumhydroxid gegeben wird.

10. Verfahren nach Anspruch 8, dadurch gekennzeichnet, dass Verfahrensschritt (b) ausgeführt wird über einen Zeitraum von höchstens 30 Minuten.

11. Verfahren nach Anspruch 8, dadurch gekennzeichnet, dass Verfahrensschritt (b) bei einer Temperatur zwischen 200 und 300 °C ausgeführt wird.

**12.** Ausgangspulver hergestellt nach dem Verfahren gemäss Patentanspruch 1, dadurch gekennzeichnet, dass es im wesentlichen ein Gemenge eines Materials von Spinellstruktur mit einem Material von Pyrochlorstruktur oder eine einzige kristalline Phase von Pyrochlorstruktur aufweist.

**13.** Ausgangspulver nach Patentanspruch 12, dadurch gekennzeichnet, dass der Spinell und das Pyrochlor des Gemenges folgende Formulierungen aufweisen:

$Zn_7 Sb_2 O_{12}$ und $Zn_2 Bi_3 Sb_3 O_{14}$.

**14.** Ausgangspulver nach Anspruch 12, dadurch gekennzeichnet, dass die durchschnittliche Teilchengrösse kleiner 1 $\mu$m ist.

**Claims**

**1.** Process for preparing a first feedstock powder used in the production of a varistor based on metal oxide and containing doping substances, the doping substances of which, after being mixed with at least one second feedstock powder mainly containing zinc oxide, are dispersed in and between the particles of the at least one second feedstock powder in a ceramic sintering process, which process is characterized by the process steps of:

(a) preparing a homogeneous aqueous disperse solution of metal oxides and/or metal hydroxides having the same metal ion stoichiometry as the doping substances mentioned and containing three or more of the metals listed below: zinc, antimony, bismuth, manganese, cobalt, chromium, barium, nickel, rare earths, silicon, tin, aluminium, boron and mixtures thereof,

(b) heating this disperse solution in a sealed autoclave to a temperature of between 200 and 350 °C in order to effect a hydrothermal treatment,

(c) cooling the hydrothermally treated, disperse solution to a temperature of no more than about 100 °C, and

(d) separating off the first feedstock powder from a solution formed during the hydrothermal treatment of the homogeneously disperse solution,

the resulting feedstock powder being predominantly formed by crystalline phases having spinel and/or pyrochlore structure.

**2.** Process according to Claim 1, which process is characterized by the further process steps of:

(e) dissolving at least one salt in a water/acid solution in order to form an acid solution of at least one of the following metal ions: aluminium, antimony, barium, bismuth, boron, chromium, cobalt, manganese, nickel, rare earths, silicon, tin and zinc,

(f) combining this acid solution with a basic solution in order to form a precipitation product which contains at least one metal ion in the form of the corresponding metal oxide or metal hydroxide,

(g) separating off this precipitation product from a salt solution formed during the precipitation process, and

(h) subjecting this precipitation product to disperse dissolution in water in order to form at least a portion of the homogeneous disperse solution according to process step (a).

**3.** Process according to Claim 2, which process is characterized by the further process steps of

(i) mixing the disperse dissolved precipitation product containing oxides and/or hydroxides of at least one of the following metals: aluminium, antimony, barium, bismuth, boron, chromium, cobalt, manganese, nickel, rare earths, silicon, tin and zinc in order to form the homogeneous disperse solution according to process step (a).

**4.** Process according to Claim 3, characterized in that the oxides and/or hydroxides according to process step (i) contain barium and/or zinc and the salts according to process step (e) contain at least cobalt and manganese.

**5.** Process according to Claim 1, which process is characterized by the further process step of

(j) adding a base to the aqueous disperse solution prepared in process step (a).

**6.** Process according to Claim 1, which process is characterized by the further process step of

(k) introducing an oxidizing gas and/or an oxidizing liquid into the pressure reactor before carrying out process step (b).

7. Process according to Claim 5, characterized in that the base is added until a pH of between 4 and 12 is reached, the exact pH depending on at least one salt dissolved according to process step (e).

8. Process according to Claim 5, characterized in that the base added to the aqueous disperse solution prepared in process step (a) is ammonium hydroxide.

9. Process according to Claim 8, characterized in that the concentration of ammonium hydroxide added to the aqueous disperse solution is between 0.2 and 0.5 mol.

10. Process according to Claim 8, characterized in that process step (b) is carried out over a period of at most 30 minutes.

11. Process according to Claim 8, characterized in that process step (b) is carried out at a temperature of between 200 and 300 °C.

12. Feedstock powder prepared by the process according to Patent Claim 1, characterized in that it essentially consists of a mixture of a material of spinel structure with a material of pyrochlore structure or of a single crystalline phase of pyrochlore structure.

13. Feedstock powder according to Patent Claim 12, characterized in that the spinel and the pyrochlore of the mixture have the following formulations:

$Zn_7Sb_2O_{12}$ and $Zn_2Bi_3Sb_3O_{14}$.

14. Feedstock powder according to Claim 12, characterized in that the average particle size is less than 1 $\mu$m.

**Revendications**

1. Procédé de préparation d'une poudre de départ utilisée pour la production d'une varistance à base d'oxyde métallique et contenant une matière de dopage, ces matières de dopage, après mélange de la première poudre de départ avec au moins une deuxième poudre de départ contenant essentiellement de l'oxyde de zinc sont réparties dans un procédé d'agglomération céramique et entre les particules d'au moins une des deux poudres de départ, caractérisé par les étapes suivantes du procédé:
   (a) préparation d'une solution dispersée homogène aqueuse d'oxydes métalliques et/ou d'hydroxydes métalliques avec la même stoechiométrie en ions métalliques que la matière de dopage indiquée et avec trois ou plusieurs des métaux indiqués ci-après : zinc, antimoine, bismuth, manganèse, cobalt, chrome, baryum, nickel, terres rares, silicium, étain, aluminium, bore et des mélanges de ceux-ci;
   (b) chauffage de cette solution dispersée dans un réacteur à pression fermé à une température entre 200 et 350 °C, pour un traitement hydrothermique;
   (c) refroidissement de la solution dispersée, traitée de manière hydrothermique à une température d'environ 100 °C au plus, et
   (d) séparation de la première poudre de départ d'une solution, qui s'est formée pendant le traitement hydrothermique de la solution dispersée homogène, où la poudre de départ est obtenue essentiellement dans les phases cristallines de structures spinelle et/ou pyrochlorée.

2. Procédé suivant la revendication 1, caractérisé par les étapes supplémentaires suivantes du procédé :
   (e) dissolution d'au moins un sel dans une solution eau/acide, pour former une solution acide d'au moins un des ions métalliques suivants : aluminium, antimoine, baryum, bismuth, bore, chrome, cobalt, manganèse, nickel, terres rares, silicium, étain et zinc;
   (f) mélange de cette solution acide et d'une solution basique, pour former un précipité, lequel présente au moins un ion métallique sous la forme de l'oxyde ou hydroxyde métallique correspondant;

13

(g) séparation de ce précipité d'une solution saline, qui s'est formée pendant le processus de précipitation, et

(h) dispersion de ce précipité dans l'eau, pour former au moins une partie de la solution homogène dispersée suivant l'étape (a) du procédé.

**3.** Procédé suivant la revendication 2, caractérisé par l'étape supplémentaire du procédé :

(i) mélange du précipité dissous, dispersé avec l'oxyde et/ou hydroxyde d'au moins un des métaux suivants : aluminium, antimoine, baryum, bismuth, bore, chrome, cobalt, manganèse, nickel, terres rares, silicium, étain et zinc, pour former la solution homogène dispersée suivant l'étape (a) du procédé.

**4.** Procédé suivant la revendication 3, caractérisé en ce que l'oxyde et/ou hydroxyde suivant l'étape (i) du procédé contient du baryum et/ou du zinc et le sel suivant l'étape (e) du procédé, au moins du cobalt et du manganèse.

**5.** Procédé suivant la revendication 1, caractérisé par l'étape supplémentaire suivante du procédé :

(j) addition d'une base à la solution aqueuse dispersée préparée dans l'étape (a) du procédé.

**6.** Procédé suivant la revendication 1, caractérisé par l'étape supplémentaire suivante du procédé :

(k) introduction d'un gaz oxydant et/ou d'un liquide oxydant dans le réacteur à pression avant réalisation de l'étape (b) du procédé.

**7.** Procédé suivant la revendication 5, caractérisé en ce que la base est ajoutée jusqu'à atteindre un pH entre 4 et 12, où le pH précis dépend d'au moins un sel dissous suivant l'étape (e) du procédé.

**8.** Procédé suivant la revendication 5, caractérisé en ce que la base ajoutée à la solution aqueuse dispersée préparée dans l'étape (a) du procédé est l'hydroxyde d'ammonium.

**9.** Procédé suivant la revendication 8, caractérisé en ce que de l'hydroxyde d'ammonium est ajouté à la solution aqueuse dispersée à une concentration se situant entre 0,2 entre 0,5 molaire.

**10.** Procédé suivant la revendication 8, caractérisé en ce que l'étape (b) du procédé est réalisée pendant une période de 30 minutes au plus.

**11.** Procédé suivant la revendication 8, caractérisé en ce que l'étape (b) du procédé est réalisée à une température entre 200 et 300 °C.

**12.** Poudre de départ préparée suivant le procédé de la revendication 1, caractérisée en ce qu'elle se présente essentiellement en un mélange d'une matière de structure spinelle et d'une matière de structure pyrochlorée ou une phase cristalline unique de structure pyrochlorée.

**13.** Poudre de départ suivant la revendication 12, caractérisée en ce que la spinelle et le pyrochlore du mélange présentent la formulation suivante :

$Zn_7Sb_2O_{12}$ et $Zn_2Bi_3Sb_3O_{14}$.

**14.** Poudre de départ suivant la revendication 12, caractérisée en ce que la granulométrie moyenne est inférieure à 1 $\mu$m.

Figur